# DEMANDE DE BREVET EUROPEEN

(11) **EP 1 482 283 A1**
(43) Date de publication de la demande: **01.12.2004**
(21) Numéro de dépôt: 03012030.7
(22) Date de dépôt: 28.05.2003
(51) Int. Cl.: G01F 11/18, A47G 19/34

(54) **Distributeur doseur à tiroir**

(71) Demandeur: L&M SERVICES B.V., 1071 CG Amsterdam (NL)
(72) Inventeur: Henckes, Benoît, 6600 Bastogne (BE)
(74) Mandataire: Busnel, Jean-Benoît

(57) **Abrégé**

1) Dispositif pour le dosage et la distribution d'un produit alimentaire en poudre à partir d'un réservoir (R) caractérisé en ce qu'il comprend un boîtier (1) destiné à être monté sur le réservoir, pourvu d'au moins un orifice d'alimentation (11) et d'un orifice d'évacuation (12), un tiroir (2) susceptible de se déplacer en translation relativement et intérieurement audit boîtier et recevant un élément doseur (3) pourvu d'une cellule de transfert (30) du produit venant alternativement en communication avec les orifices d'alimentation (11) et d'évacuation (12) dudit boîtier par déplacement dudit tiroir.

## Description

La présente invention concerne un dispositif pour la distribution et le dosage d'un produit alimentaire en poudre ou en grains.

Ces produits sont généralement conditionnés à l'intérieur de réservoirs dans lesquels le consommateur doit prélever une quantité déterminée correspondant à l'usage recherché.

Il est parfois difficile d'évaluer la dose nécessaire à cet usage en particulier quand pour obtenir la quantité totale de produit il est nécessaire d'effectuer des prélèvements multiples.

De plus, ces prélèvement deviennent laborieux lorsque le niveau de produit dans le réservoir est très bas.

En outre, l'ouverture du réservoir est susceptible d'entraîner des risques de pollution ou de dégradation des qualités du produit.

Par ailleurs, l'inviolabilité du conditionnement n'est pas garantie ou bien est assurée au moyen d'une bande périphérique que le consommateur doit enlever avant la toute première utilisation pour ouvrir le réservoir et accéder à son contenu. L'aspect esthétique du conditionnement s'en trouve alors ainsi modifié.

La présente invention a pour but de résoudre ces problèmes techniques de manière satisfaisante.

Ce but est atteint selon l'invention au moyen d'un dispositif caractérisé en ce qu'il comprend un boîtier destiné à être monté sur le réservoir, pourvu d'au moins un orifice d'alimentation et d'un orifice d'évacuation, un tiroir susceptible de se déplacer en translation relativement et intérieurement audit boîtier et recevant un élément doseur pourvu d'une cellule de transfert du produit venant alternativement en communication avec les orifices d'alimentation et d'évacuation dudit boîtier par déplacement dudit tiroir.

Selon une caractéristique avantageuse, ledit tiroir comporte, sur ses faces latérales internes, des crans de retenue coopérant par encliquetage avec des ergots d'accrochage portés par ledit élément doseur.

Selon une première variante, les crans de retenue sont constitués d'une rampe d'entrée inclinée formant came et d'une nervure rectiligne orthogonale d'échappement formant butée.

Selon une autre variante, les ergots d'accrochage sont portés par des ailettes latérales flexibles et comprennent une face avant biseautée de guidage et une face arrière droite de blocage.

De préférence, la distance comprise entre la face avant dudit tiroir et lesdits crans de retenue est supérieure à la largeur de l'élément doseur entre ses ergots et la paroi avant de sa cellule de transfert façon à définir une position d'inviolabilité.

Selon une autre caractéristique, ledit boîtier comporte un socle dans lequel est ménagé l'orifice d'alimentation et sur lequel se déplace ledit tiroir et/ou ledit élément doseur.

Selon encore une autre caractéristique, ledit élément doseur comporte un doigt déformable en saillie destiné à venir en butée contre la paroi interne d'extrémité dudit boîtier lorsque la cellule de transfert de l'élément doseur est en position d'alimentation et à se déformer en formant ressort de rappel lorsque ladite cellule est en position d'évacuation.

De préférence, ledit doigt présente un profil sensiblement en S qui se rattache à la paroi avant de ladite cellule.

Selon d'autres variantes, ledit élément doseur comporte un volet supérieur d'obturation de l'orifice d'évacuation solidaire de la paroi avant de ladite cellule, ainsi qu'un volet inférieur d'obturation de l'orifice d'alimentation solidaire de la paroi arrière de ladite cellule.

En outre, ledit tiroir possède un compartiment frontal susceptible de recevoir une partie de l'élément doseur.

De préférence, l'élément doseur est pourvu de dents coopérant avec des créneaux correspondant ménagés sur le boîtier pour assurer le calage de la cellule sur l'orifice d'alimentation et interdire sa sortie du boîtier.
Le dispositif de l'invention offre une structure ergonomique dont le profil peut s'inscrire de façon harmonieuse dans le volume d'ensemble d'un réservoir traditionnel de section rectangle ou circulaire.
La position d'inviolabilité du dispositif garantie l'herméticité du réservoir en interdisant toute ouverture frauduleuse et en préservant ainsi le produit des risques de pollution ou de contamination.
En outre, l'armement et le chargement du dispositif s'effectuent de manière aisée et permettent une grande souplesse d'utilisation.
La précision des mouvements et des positionnements relatifs des différentes pièces est assurée, pour chaque phase, par la coopération des dents de l'élément doseur avec les créneaux du boîtier.

Enfin, la structure du dispositif en trois pièces est particulièrement simple et économique et offre une compacité remarquable tout en assurant un dosage fiable et reproductible.

La présente invention sera mieux comprise à la lecture de la description qui va suivre en référence aux dessins sur lesquels ;

Les figures 1A, 1B et 1C représentent des vues en perspective d'un mode de réalisation du dispositif de l'invention, respectivement en position d'inviolabilité, de fermeture et de distribution.

La figure 2 représente une vue en perspective avec éclaté partiel, du dispositif des figures précédentes en position de fermeture.

Les figures 3A et 3B représentent des vues en perspective respectivement de dessus et de dessous, des trois pièces constitutives du dispositif de l'invention.

Les figures 4A et 4B représentent des vues en coupe horizontale et verticale du dispositif des figures précédentes, en position d'inviolabilité.

Les figures 5A et 5B représentent des vues en coupe horizontale et verticale du dispositif des figures précédentes, en position de fermeture/dosage.

Les figures 6A et 6B représentent des vues en coupe horizontale et verticale du dispositif des figures précédentes, en position de distribution.
Le dispositif D représenté sur les figures 1A à 1C est destiné à assurer le dosage et la distribution d'un produit alimentaire en poudre, en granulés ou en grains tel que du café soluble à partir d'un réservoir R sur l'ouverture duquel il est monté en formant un couvercle.

Le dosage et la distribution du produit s'effectuent en position renversée du réservoir en utilisant l'écoulement par gravité mais le stockage ou l'entreposage se font avec le dispositif en partie haute.

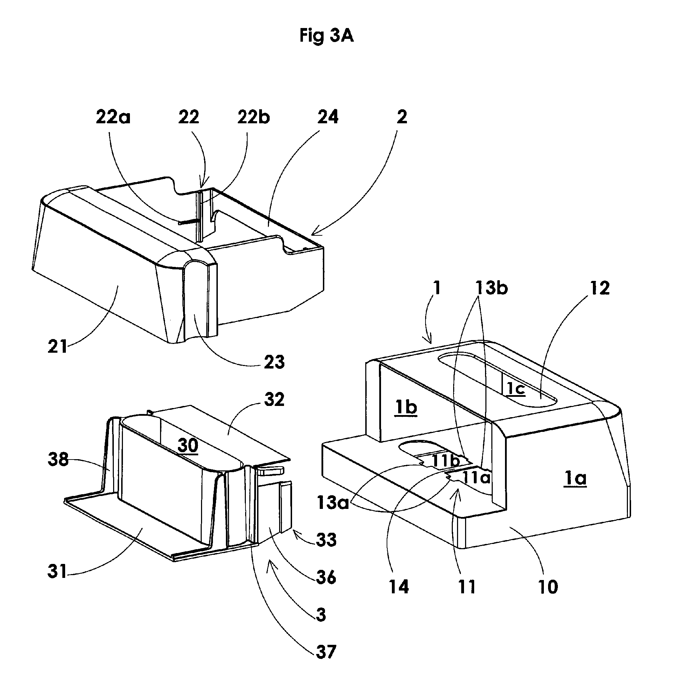

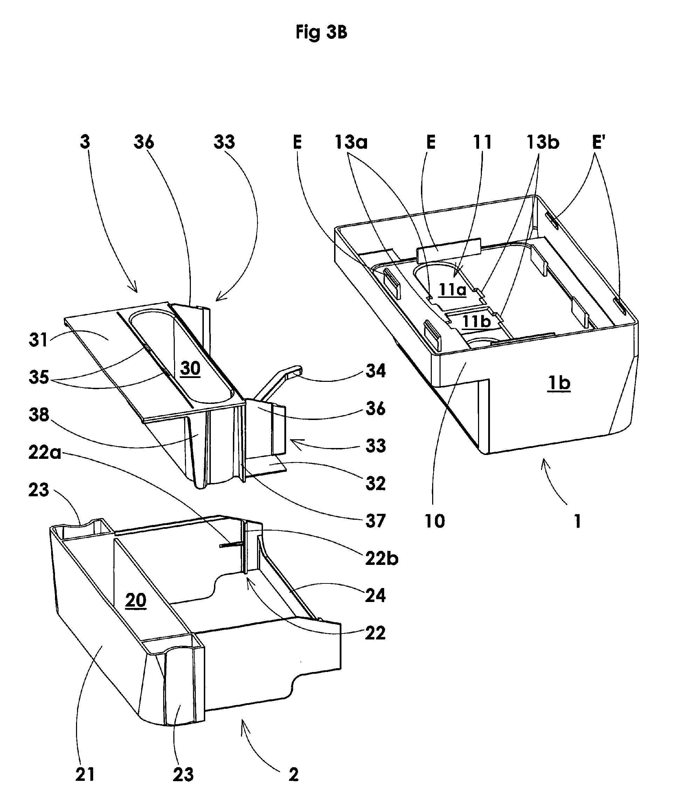

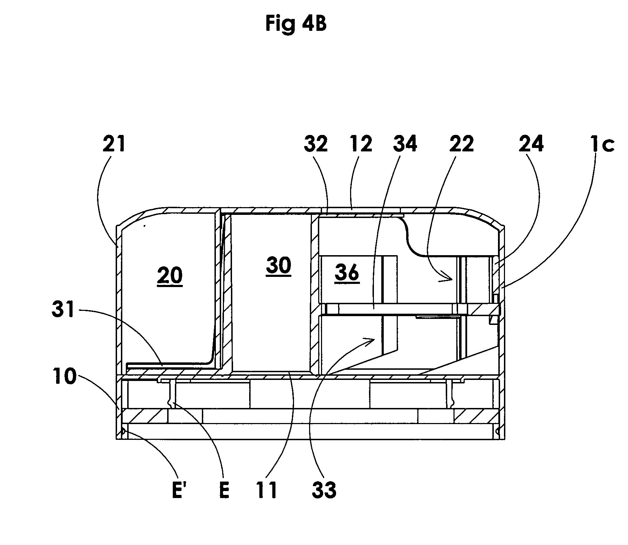

Le dispositif comprend un boîtier 1 pourvu de moyens d'assemblage sur le réservoir R ici sous la forme d'organes d'encliquetage E, E', visibles notamment sur les vues des figures 3B, 4B et coopérant avec des moyens complémentaires ménagés sur le pourtour du réservoir R.

Le boîtier 1 est pourvu, en outre, d'au moins un orifice d'alimentation 11 communiquant directement avec le réservoir R et d'un orifice d'évacuation 12.

Le dispositif comprend également un tiroir 2 susceptible de se déplacer en translation relativement et intérieurement au boîtier 1 et recevant un élément doseur 3.

Le boîtier 1 comporte un socle 10 dans lequel sont ménagés ici deux orifices d'alimentation 11a, 11b, adjacents, séparés par un pontet 14, et sur lequel se déplacent en coulissant, le tiroir 2 et l'élément doseur 3.

Le boîtier 1 est constitué de parois latérales 1a, 1b, et d'un fond 1c raccordés au socle 10 et possède une ouverture frontale par laquelle est introduit le tiroir 2.

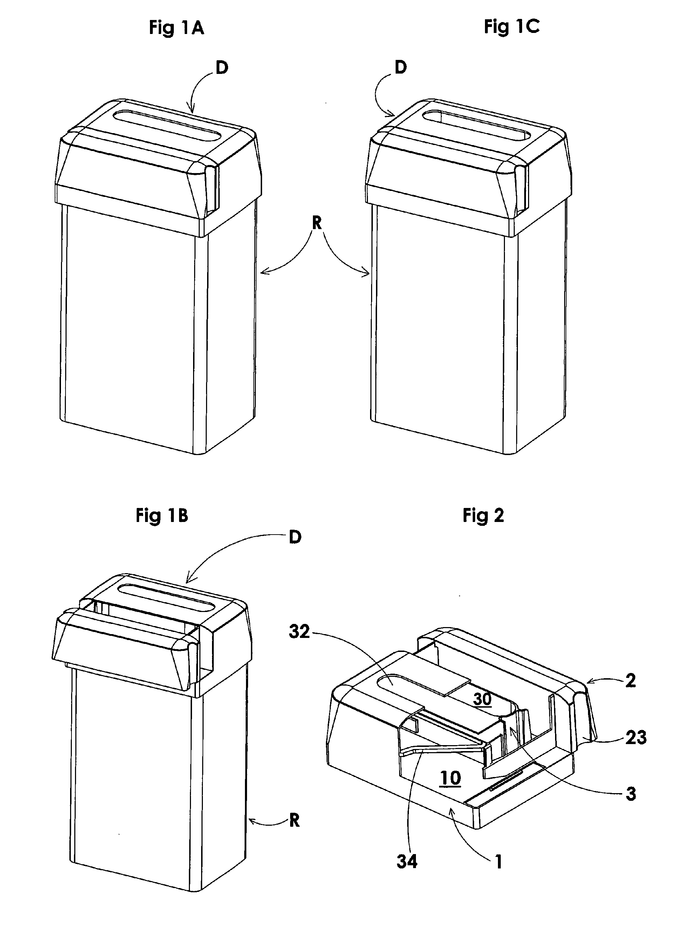

Le tiroir 2 est, quant à lui, constitué d'une paroi frontale 21 munie de moyens de prise sous forme de cavités d'angle 23, de parois latérales et d'une bride 24 fermant le pourtour du tiroir. La paroi 21 est suffisamment large pour venir en butée contre les bords de l'ouverture du boîtier 1 dans les positions d'inviolabilité et de distribution ou d'évacuation du produit, comme représenté respectivement sur les figures 1A et 1C.

L'élément doseur 3 est pourvu d'une cellule de transfert 30 de produit venant alternativement en communication avec les orifices d'alimentation 11 et d'évacuation 12 du boîtier 1 qui sont décalés longitudinalement, par déplacement du tiroir 2.

La cellule 30 est constituée d'une portion de conduit vertical, débouchant de part et d'autre, et dont le volume interne est déterminé en fonction de la quantité de produit correspondant à une dose. La section de la cellule correspond exactement à la géométrie des orifices 11,12.

L'élément doseur comporte également un volet supérieur 32 d'obturation de l'orifice d'évacuation 12 ainsi qu'un volet inférieur 31 d'obturation de l'orifice d'alimentation 11, tous deux solidaires respectivement des parois arrière et avant de ladite cellule 30 et dont les dimensions sont plus grandes que celles des orifices 11,12.

Le tiroir 2 renferme un compartiment 20, extérieur au boîtier 1, qui reçoit une partie de l'élément doseur 3 et notamment le volet inférieur 31, en position d'inviolabilité du dispositif (voir figures 3B et 4B).

Les volets, inférieur 31 et supérieur 32, sont raccordés à la cellule 30 en assurant aussi la fonction de sabots de guidage au contact des parois en regard du boîtier 1 et contribuent à la stabilité de l'élément de dosage 3 lors de son mouvement de translation.

L'élément doseur 3 est muni de dents 35 réalisées au droit de la paroi frontale de la cellule 30 et représentées sur la figure 3B. Les dents 35 viennent se loger dans des créneaux 13a, 13b correspondants, ménagés respectivement sur les bords avant et arrière de l'orifice d'alimentation 11 du boîtier 1 pour assurer le calage de l'élément 3 dans deux positions déterminées et lui interdire tout déplacement vers l'extérieur.

L'élément doseur 3 comporte également un doigt 34 déformable de profil en S qui fait saillie à partir de la paroi avant de la cellule 30 et en direction de la paroi interne d'extrémité du boîtier 1 contre laquelle il est en butée quelque soit la position du dispositif.

Le doigt 34 permet de limiter la course du tiroir 2 dans le boîtier 1 et d'assurer son rappel automatique et élastique dans la position d'étanchéité.

Le tiroir 2 comporte, sur les faces internes de ses parois latérales, des crans de retenue 22 coopérant par encliquetage avec des ergots d'accrochage 33 portés par l'élément doseur 3 comme représenté sur les figures 3A, 4A, 5A, et 6A.

Ces crans 22 sont constitués ici d'une rampe d'entrée longitudinale 22a (convergente vers l'intérieur du tiroir) formant came et d'une nervure rectiligne orthogonale 22b d'échappement formant butée pour l'ergot 33.

Les ergots d'accrochage 33 sont portés par des ailettes latérales flexibles 36 encadrant la cellule 30 sous le volet supérieur 32.

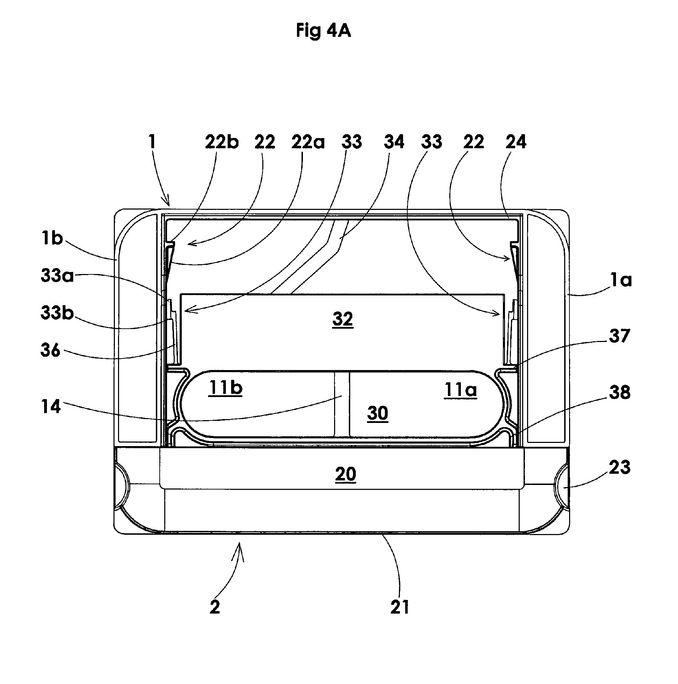

Dans la position dite d'inviolabilité représentée sur les figures 1A, 4A et 4B, le tiroir 2 est fermé, l'orifice d'évacuation est masqué par le volet 32 et la cellule 30 est calée sur l'orifice d'alimentation. Cette position est utile et nécessaire pour l'entreposage dans les points de vente où le risque d'ouverture frauduleuse est important.
Cette position est rendue possible par le fait que le compartiment 20 permet d'augmenter la distance comprise entre la face avant du tiroir et les crans 22. Cette distance est alors plus grande que la largeur de l'élément doseur entre les ergots 33 et la paroi avant de la cellule 30 qui est raccordée au volet 31.

Bien que dans cette position l'orifice d'alimentation 11 communique avec la cellule 30, l'étanchéité est ici assurée en partie haute, par la paroi du boîtier 1 comme représenté sur la figure 4B.

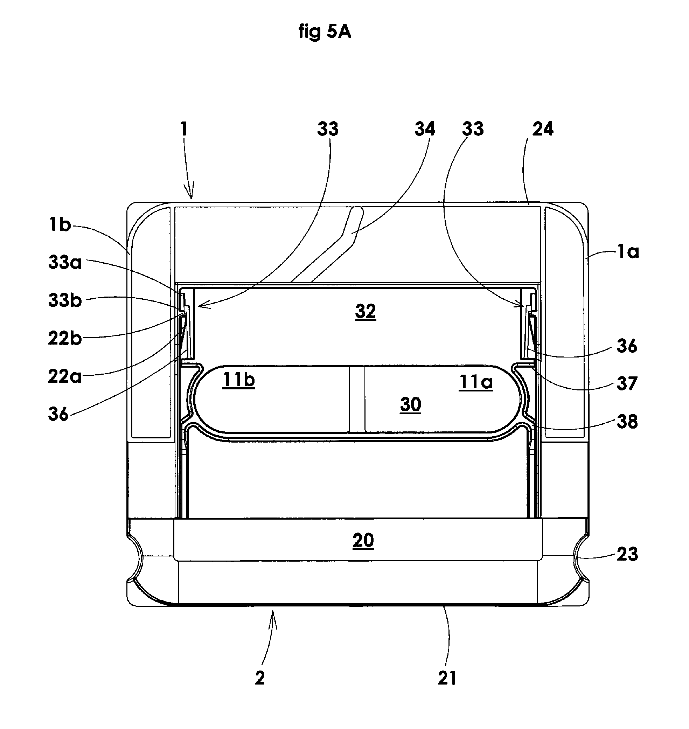

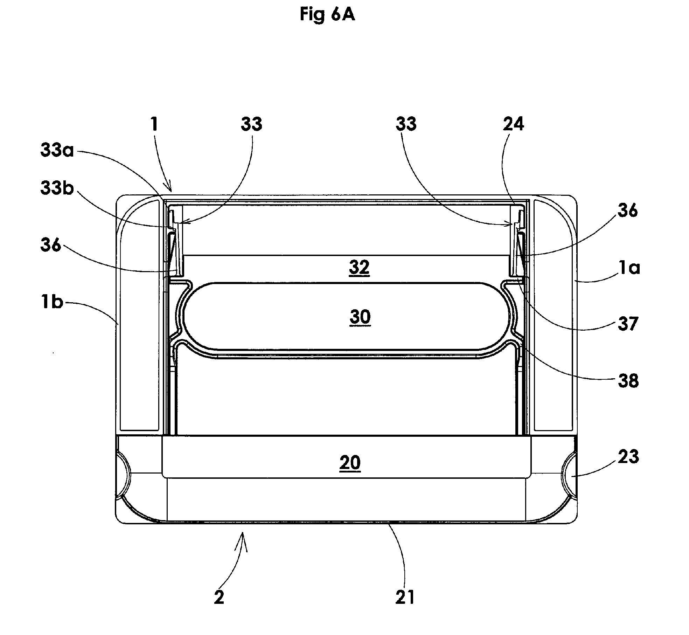

Les ergots 33 comprennent une face avant biseautée 33a assurant le guidage sur la rampe 22a depuis la position d'inviolabilité de la figure 4A, et une face arrière droite 33b assurant ensuite le blocage contre la nervure rectiligne orthogonale 22b du tiroir 2 pour assurer la liaison définitive du tiroir 2 et de l'élément 3, comme représenté sur les figures 5A et 6A.

Après encliquetage, la bride 24 du tiroir 2 formant aussi entretoise, maintient une certaine rigidité de l'ensemble ainsi constitué.

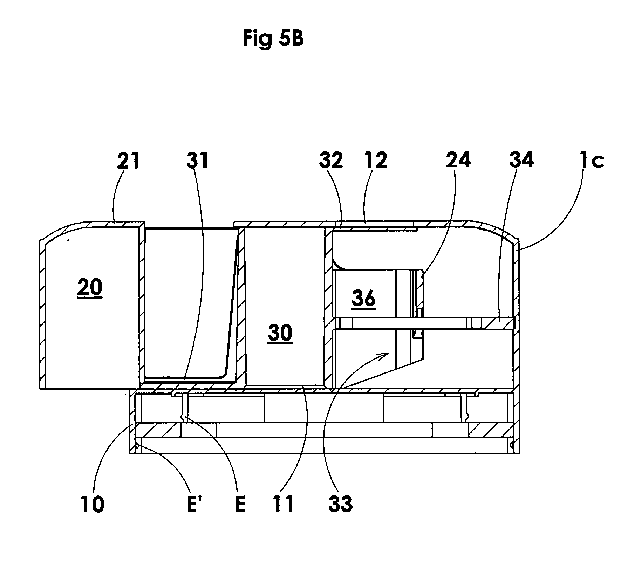

Le passage de la position d'inviolabilité (figures 1A,4A,4B) à la position dite de dosage (figures 1B,5A,5B) s'effectue alors en extrayant, par traction axiale, le tiroir 2 de son logement dans le boîtier 1. Ce déplacement ne modifie pas la position de l'élément doseur 3 dont la cellule 30 reste calée au-dessus de l'orifice 11 par engagement des dents 35 dans les créneaux 13a. Mais ce mouvement a pour effet de mettre en prise les crans 22 avec les ergots 33 et de fixer l'élément de dosage 3 à l'arrière du tiroir 2 contre la bride 24.

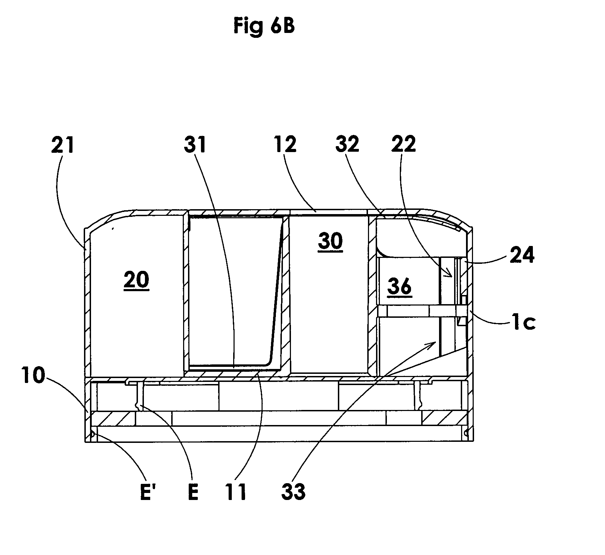

Le calage dynamique des deux ensembles en mouvement relatif (tiroir- doseur/boîtier) est, en outre, amélioré par la présence sur l'élément doseur 3 de cloisons transversales 37, 38 en contact de glissement avec les parois internes du boîtier 1 (figures 3A, 3B, 4A).
Le dosage du produit est obtenu en renversant le réservoir muni du dispositif ce qui permet alors de remplir la cellule 30. Puis, à partir de cette position, l'utilisateur referme le tiroir 2 et fait passer ainsi l'élément doseur 3, avec sa cellule pleine, dans la position dite d'évacuation ou de distribution (figures 1C, 6A,6B). Dans cette dernière position, la cellule 30 débouche à l'extérieur via l'orifice d'évacuation 12, le doigt 34 est comprimé élastiquement et l'orifice d'alimentation 11 est obturé par le volet inférieur 31 tandis que les dents 35 sont engagées dans les créneaux 13b.

La fermeture du tiroir 2 s'effectue donc avec un léger effort de l'utilisateur qui doit pousser sur la paroi frontale 21 en prenant appui manuellement dans les cavités d'angle 23. Une fois la dose de produit distribuée, l'utilisateur relâche le tiroir qui revient automatiquement dans sa position de repos étanche (figures 1B,5A,5B).

## Revendications

1. Dispositif pour le dosage et la distribution d'un produit alimentaire en poudre à partir d'un réservoir (R) **caractérisé en ce qu'**il comprend un boîtier (1) destiné à être monté sur le réservoir, pourvu d'au moins un orifice d'alimentation (11) et d'un orifice d'évacuation (12), un tiroir (2) susceptible de se déplacer en translation relativement et intérieurement audit boîtier et recevant un élément doseur (3) pourvu d'une cellule de transfert (30) du produit venant alternativement en communication avec les orifices d'alimentation (11) et d'évacuation (12) dudit boîtier par déplacement dudit tiroir.

2. Dispositif selon la revendication 1 **caractérisé en ce que** ledit tiroir (2) comporte, sur ses faces latérales internes, des crans de retenue (22) coopérant par encliquetage avec des ergots d'accrochage (33) portés par ledit élément doseur (3).

3. Dispositif selon la revendication 2 **caractérisé en ce que** les crans de retenue (22) sont constitués d'une rampe d'entrée inclinée (22a) formant came et d'une nervure rectiligne orthogonale d'échappement (22b) formant butée.

4. Dispositif selon la revendication 2 ou 3 **caractérisé en ce que** les ergots d'accrochage (33) sont portés par des ailettes latérales flexibles (36) et comprennent une face avant biseautée (33a) de guidage et une face arrière droite (33b) de blocage.

5. Dispositif selon l'une des revendications 2 à 4 **caractérisé en ce que** la distance comprise entre la face frontale (21) dudit tiroir (2) et lesdits crans de retenue (33) est supérieure à la largeur de l'élément doseur (3) entre ses ergots (33) et la paroi avant de sa cellule de transfert (30) façon à définir une position d'inviolabilité.

6. Dispositif selon l'une des revendications précédentes **caractérisé en ce que** ledit boîtier (1) comporte un socle (10) dans lequel est ménagé l'orifice d'alimentation (11) et sur lequel se déplace ledit tiroir (2) et/ou ledit élément doseur (3).

7. Dispositif selon l'une des revendications précédentes **caractérisé en ce que** ledit élément doseur (3) comporte un doigt déformable (34) en saillie destiné à venir en butée contre la paroi interne d'extrémité (1c) dudit boîtier (1) lorsque la cellule de transfert (30) de l'élément doseur (3) est en position d'alimentation et à se déformer en formant ressort de rappel lorsque ladite cellule est en position d'évacuation.

8. Dispositif selon la revendication 6 **caractérisé en ce que** ledit doigt (34) présente un profil sensiblement en S et se rattache à la paroi avant de ladite cellule (30).

9. Dispositif selon l'une des revendications précédentes **caractérisé en ce que** ledit élément doseur (3) comporte un volet supérieur (32) d'obturation de l'orifice d'évacuation (12) solidaire de la paroi avant de ladite cellule (30).

10. Dispositif selon l'une des revendications précédentes **caractérisé en ce que** ledit élément doseur (3) comporte un volet inférieur (31) d'obturation de l'orifice d'alimentation (11) solidaire de la paroi arrière de ladite cellule (30).

11. Dispositif selon l'une des revendications précédentes **caractérisé en ce que** ledit tiroir (2) possède un compartiment frontal (20) susceptible de recevoir une partie de l'élément doseur (3).

12. Dispositif selon l'une des revendications précédentes **caractérisé en ce que** l'élément doseur (3) est pourvu de dents (35) coopérant avec des créneaux (13a, 13b) correspondant ménagés sur le boîtier (1) pour assurer le calage de la cellule (30) sur l'orifice d'alimentation (11) et interdire sa sortie du boîtier (1).
